# EUROPEAN PATENT SPECIFICATION

(11) **EP 3 312 024 B1**
(45) Date of publication and mention of the grant of the patent: **01.04.2020**
(21) Application number: 16811355.3
(22) Date of filing: 13.05.2016
(51) Int. Cl.: B60C 11/03

(54) **TIRE FOR A VEHICLE**
REIFEN FÜR EIN FAHRZEUG
PNEU POUR UN VÉHICULE

(30) Priority: 16.06.2015 JP 2015121057
(43) Date of publication of application: 25.04.2018
(73) Proprietor: Bridgestone Corporation, Tokyo 104-8340 (JP)
(72) Inventor: YAMAGUCHI, Masashi, Tokyo 104-8340 (JP)
(74) Representative: Oxley, Robin John George
(86) International application number: PCT/JP2016/064302
(87) International publication number: WO 2016/203880

(56) References cited:
- EP-A1- 0 561 531
- EP-A2- 0 357 462
- JP-A- H05 254 313
- JP-A- H09 156 316
- JP-A- 2000 094 907
- JP-A- 2014 051 178

## Description

### BACKGROUND OF THE INVENTION

### Field of the Invention

The present invention relates to a tire for a vehicle, comprising four or more circumferential grooves on a tread portion.

### Related Background of the Invention

During traveling of vehicle, the tread portion of the tire generates heat, and thus temperature of the tread portion rises. The temperature of the tread portion is a main factor affecting durability of the tread portion, and in order to enhance the durability of the tread portion, temperature rise in the tread portion is required to be coped with. Particularly, influence of heat generation caused by concentration of generated heat or the like at the end of the belt (or the belt reinforcement layer) in the tread portion on the outside in the tire width direction is significant in comparison with that in a tread central portion side.

For coping with this, in conventional tires, a projection is mainly formed on a groove bottom of the circumferential groove located on the outermost side in the tire width direction, and thereby increasing heat transfer rate of the circumferential groove.

During traveling of vehicle, the tread portion on the outside in the tire width direction is cooled by heat radiation of the outermost circumferential groove, and thus the temperature rise of the tread portion is restrained. However, a formation of the projection results in a complicated inside shape of the circumferential groove which renders the formation of the circumferential groove difficult. In addition, when the projection is damaged, the heat radiation of the circumferential groove is sometimes affected. Therefore, as for the conventional tire, there is room for improvement from a view point of increasing the cooling effect of the tread portion by the outermost circumferential groove more surely.

In addition, a tire in which the temperature rise on the tread portion is suppressed by block grooves formed in a shoulder block row has been known (refer to Patent Literature 1).

However, in the conventional tire described in Patent Literature 1, each block groove is required to be formed in a tread of the block along a tire circumferential direction. Therefore, the block grooves cannot be formed in some cases depending on a shape of the block and a required performance of the block.

EP 0561531 A1 discloses a tire for a vehicle, having a specified running direction, and comprising a pair of sidewalls, a tread provided with at least one circumferential groove extending parallel to the equatorial plane of the tire, a plurality of lug grooves intersecting said at least one circumferential groove, and land portions defined by the at least one circumferential groove and the lug grooves intersecting therewith. Attention is also drawn to the disclosures of EP 0357462 A2 and JP 2014-051178 A.

### Prior Art

### Patent Literature

Patent Literature 1: Japanese Patent Laid-Open No. 2010-125998

### SUMMARY OF THE INVENTION

### Problems to be Solved by Invention

The present invention is made in view of the above-described conventional problems and an object thereof is to improve, in a tire for a vehicle, comprising four or more circumferential grooves, the heat radiation of the circumferential grooves located on the outermost side in the tire width direction and to increase the cooling effect of the tread portion by the outermost circumferential grooves.

### Means for solving Problems

The present invention is a tire for a vehicle, in accordance with independent claim 1. Preferred embodiments of the present invention are laid down in the appended dependent claims.

### EFFECTS OF THE INVENTION

In the tire for a vehicle, comprising four or more circumferential grooves, according to the present invention, the heat radiation of the circumferential grooves located on the outermost side in the tire width direction can be improved, and thus the cooling effect of the tread portion by the outermost circumferential grooves can be increased.

### BRIEF DESCRIPTION OF THE DRAWINGS

Fig. 1 is a perspective view of a tire of a first embodiment;
Fig. 2 is a plan view illustrating a tread pattern of the tire of the first embodiment;
Fig. 3A is a view to explain the air flow during traveling of vehicle;
Fig. 3B is a view to explain the air flow during traveling of vehicle;
Fig. 4 is a graph indicating heat transfer rate of the first circumferential groove and heat transfer rate of the second circumferential groove;
Fig. 5 is a plan view illustrating a tread pattern of a tire of a second embodiment;
Fig. 6 is a graph indicating heat transfer rate of the first circumferential groove and heat transfer rate of the second circumferential groove;
Fig. 7 is a plan view illustrating a tread pattern of a tire of a third embodiment;
Fig. 8 is a graph indicating heat transfer rate of the first circumferential groove;
Fig. 9 is a plan view illustrating a tread pattern of a tire of a fourth embodiment;
Fig. 10 is a perspective view of a tire of a fifth embodiment, which is not according to the present invention, but is useful for understanding the present invention;
Fig. 11 is a perspective view illustrating a part of a tread pattern formed on the tire of the fifth embodiment;
Fig. 12 is a perspective view of a tire of a sixth embodiment, which is not according to the present invention, but is useful for understanding the present invention;
Fig. 13 is a perspective view of a tire of a seventh embodiment, which is not according to the present invention, but is useful for understanding the present invention;
Fig. 14 is a perspective view of a tire of an eighth embodiment, which is not according to the present invention, but is useful for understanding the present invention; and
Fig. 15 is a perspective view of a tire of a ninth embodiment, which is not according to the present invention, but is useful for understanding the present invention.

### DESCRIPTION OF THE PREFERRED EMBODIMENTS

An embodiment of a tire of the present invention will be described by referring to the attached drawings.

The tire of the present embodiment is a pneumatic tire for a vehicle (a tire for heavy load and a tire for automobile, for example) and is formed into a well-known structure by common tire constituent members. Namely, the tire includes a pair of bead portions, a pair of side wall portions located outside the pair of bead portions in a tire radial direction, a tread portion in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

### (The first embodiment)

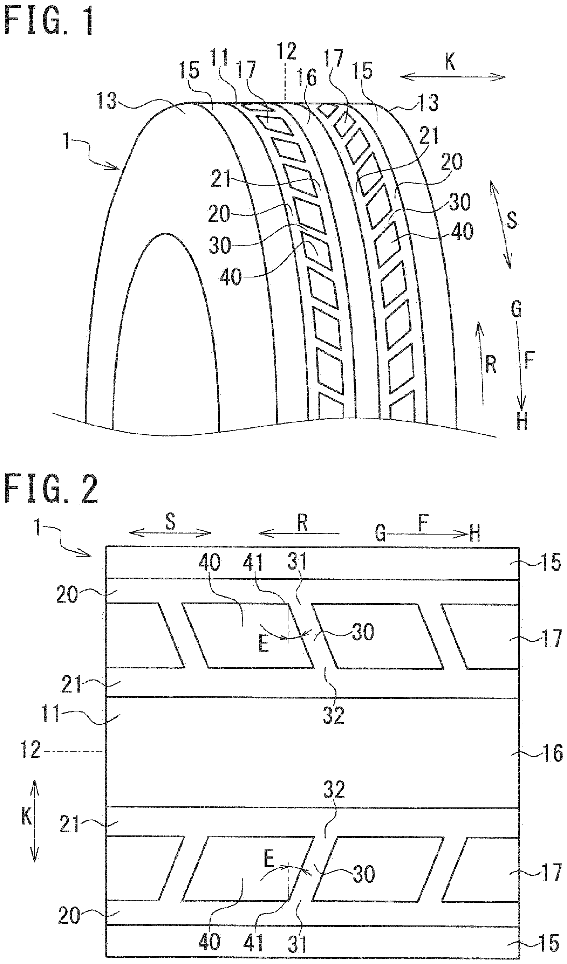

Fig. 1 is a perspective view of a tire 1 of the first embodiment. Fig. 2 is a plan view illustrating a tread pattern of the tire 1 of the first embodiment and schematically illustrates a part of a tread portion 11 in a tire circumferential direction S where the tire 1 shown in Fig. 1 is rotated counterclockwise by 90°.

Note that the tire 1 is a tire for which a rotating direction during forward movement of the vehicle is designated and it rotates in a tire rotating direction R during forward movement of the vehicle. The tire rotating direction R is designated corresponding to the tread pattern of the tire 1 and the tire 1 is installed on the vehicle so that the tire rotating direction R is compatible. In addition, a tire equatorial plane 12 is located on a center part of the tread portion 11 in a tire width direction K and a shoulder portion 13 of the tire 1 is located outside the tread portion 11 in the tire width direction K.

As illustrated, the tire 1 includes a plurality of circumferential grooves 20, 21, a plurality of land parts 15, 16, 17, a plurality of width direction grooves 30, and a plurality of blocks 40, in the tread portion 11. A plurality of the circumferential grooves 20, 21 are a main groove (circumferential main groove) extending in the tire circumferential direction S, and is continuously formed along the tire circumferential direction S. Moreover, the tire 1 comprises four or more circumferential grooves which include the first circumferential groove 20 and the second circumferential groove 21. The first circumferential groove 20 is located on the outermost side in the tire width direction K among the plurality of the circumferential grooves 20, 21, and the second circumferential groove 21 is adjacent to the inside of the first circumferential groove 20 in the tire width direction K. Here, the plurality of circumferential grooves 20, 21 comprise two first circumferential grooves 20 and two second circumferential grooves 21, and the tire 1 includes four circumferential grooves 20, 21.

The first circumferential groove 20 is an outside circumferential groove arranged outside the second circumferential groove 21 in the tire width direction K (shoulder portion 13 side), and formed on both sides of the tire equatorial plane 12 and between the second circumferential groove 21 and the shoulder portion 13 (tread end). The second circumferential groove 21 is an inside circumferential groove arranged inside the first circumferential groove 20 in the tire width direction K, and formed on both sides of the tire equatorial plane 12 and between the first circumferential groove 20 and the tire equatorial plane 12. The tire 1 includes two first circumferential grooves 20 located inside both the shoulder portions 13 in the tire width direction K and two second circumferential grooves 21 located on both sides of the tire equatorial plane 12 in the tire width direction K. A pair of the first circumferential groove 20 and the second circumferential groove 21 is arranged between the tire equatorial plane 12 and the shoulder portion 13 on both sides of the tire equatorial plane 12. In addition, the first circumferential groove 20 and the second circumferential groove 21 are straight grooves and linearly extend in the tire circumferential direction S without bending or curving.

The plurality of land parts 15, 16, 17 are convex portions on the tread portion 11 partitioned by the plurality of the circumferential grooves 20, 21 and extend along the circumferential grooves 20, 21 in the circumferential direction S of the tire. In addition, the plurality of land parts 15, 16, 17 comprise two first land parts 15, one second land part 16 and two third land parts 17. The first land part 15 is partitioned by the first circumferential groove 20 and arranged outside the first circumferential groove 20 in the tire width direction K. The first land part 15 is a shoulder land part arranged on the outermost side (shoulder portion 13 side) in the tire width direction K among the plurality of land parts 15, 16, 17 and is located outside the third land part 17 in the tire width direction K.

The second land part 16 is partitioned by the two second circumferential grooves 21 and arranged inside the second circumferential groove 21 in the tire width direction K. The second land part 16 is a center land part arranged in the center area of the tread portion 11 which includes the tire equatorial plane 12, and is located between the two second circumferential grooves 21 (between the two third land parts 17). The tire equatorial plane 12 is located at a center portion of the second land part16. The third land part 17 is partitioned by the first circumferential groove 20 and the second circumferential groove 21 and arranged between the first circumferential groove 20 and the second circumferential groove 21. The third land part 17 is an intermediate land part arranged in the intermediate area of the tread portion 11 between the tire equatorial plane 12 and the shoulder portion 13, and is located between the first land part 15 and the second land part 16.

The first land part 15 and the second land part 16 are rib-shaped land parts extending in the tire circumferential direction S. Each of the rib-shaped land parts is a land part partitioned into a rib shape by the circumferential groove or grooves, and includes a land part (continuous land part) continuously extending in the tire circumferential direction S without being divided in the circumferential direction S. The rib-shaped land part may be formed with grooves or sipes which do not divide the land part in the tire circumferential direction S. Here, the first land part 15 and the second land part 16 are rib-shaped land parts extending continuously in the tire circumferential direction S, and are partitioned only by the circumferential grooves 20, 21.

The third land part 17 is a block row (intermittent land part) comprising a plurality of blocks 40 arranged in parallel in the tire circumferential direction S and a plurality of width direction grooves 30. The plurality of width direction grooves 30 are the lateral grooves (lug grooves) and extend with an inclination between the first circumferential groove and the second circumferential with respect to the tire width direction K. The groove bottom surfaces of the first circumferential groove 20, the second circumferential groove 21 and the plurality of width direction grooves 30 are smooth surfaces without convexity and concavity, and depths of the first circumferential groove 20, the second circumferential groove 21 and the plurality of width direction grooves 30 are the same.

The plurality of width direction grooves 30 are arranged separately in the tire circumferential direction S and divide the third land part 17 in the tire circumferential direction S. The plurality of width direction grooves 30 have a first end 31 and a second end 32 which are opened to the first circumferential groove 20 and the second circumferential groove 21, respectively. The first end 31 is one end (first opening) of the width direction groove 30 opened to the first circumferential groove 20, and the second end 32 is the other end (second opening) of the width direction groove 30 opened to the second circumferential groove 21. The plurality of blocks 40 are partitioned between the first circumferential groove 20 and the second circumferential groove 21 by the first circumferential groove 20, the second circumferential groove 21 and the plurality of width direction grooves 30, and each of the blocks 40 is formed into a predetermined polygonal shape (here, parallelogram shape) when viewed from the outside in the tire radial direction.

As described above, the tire 1 includes the plurality of blocks 40 and the plurality of width direction grooves 30 formed in the third land part 17. The plurality of blocks 40 are adjacently, sequentially arranged in the tire circumferential direction S, and the plurality of width direction grooves 30 are located between the adjacent blocks 40 in the tire circumferential direction S. The first circumferential groove 20 extends along outer walls of the plurality of blocks 40 in the tire width direction K, and the second circumferential groove 21 extends along inner walls of the plurality of blocks 40 in the tire width direction K.

The tire 1 is installed on the vehicle and rotates in the tire rotating direction R along with traveling (forward movement) of the vehicle. During traveling of the vehicle (tire rotation) by forward movement of the vehicle, an air flow in a predetermined direction is generated in the first circumferential groove 20 and the second circumferential groove 21. The air flow is a relative flow of air (wind) generated by rotation of the tire 1 and is generated in a direction opposite to the tire rotating direction R. An arrow F illustrated in Figs. 1 and 2 is a direction of the air flow generated in the first circumferential groove 20 and the second circumferential groove 21, and the air flow in the same direction is generated in the first circumferential groove 20 and the second circumferential groove 21. In the first circumferential groove 20 and the second circumferential groove 21, the air flows from an upstream side G in the air flow direction F toward the downstream side H in the air flow direction F and cools the tread portion 11.

In the tire 1 of the first embodiment, the plurality of width direction grooves 30 formed between the first circumferential groove 20 and the second circumferential direction groove 21 control the air flow and adjust the heat radiation in the first circumferential groove 20 and the second circumferential groove 21. As a result, the heat radiation of the first circumferential groove 20 located on the outermost side in the tire width direction K is increased.

Specifically, the first end 31 of each of the width direction grooves 30 is located on the upstream side G of the second end 32 of each of the width direction grooves 30 in the air flow direction F. In all the width direction grooves 30 located between the first circumferential groove 20 and the second circumferential groove 21, the position of the first end 31 in the tire circumferential direction S is located on the upstream side G of the position of the second end 32 in the tire circumferential direction S in the air flow direction F. Here, each of the plurality of width direction grooves 30 is inclined with respect to the tire width direction K at an angle E within a range 10 to 60 degrees. The width direction groove 30 is inclined with respect to the tire circumferential direction S, so that it is inclined inward in the tire width direction K, and inclined toward the downstream side H in the air flow direction F, and extends linearly in a direction inclined with respect to the tire width direction K at a predetermined angle E without bending or curving. A position (opening position) at which the width direction groove 30 is connected with the second circumferential groove 21 is set at the downstream side H of a position at which the width direction groove 30 is connected with the first circumferential groove 20 in the air flow direction F.

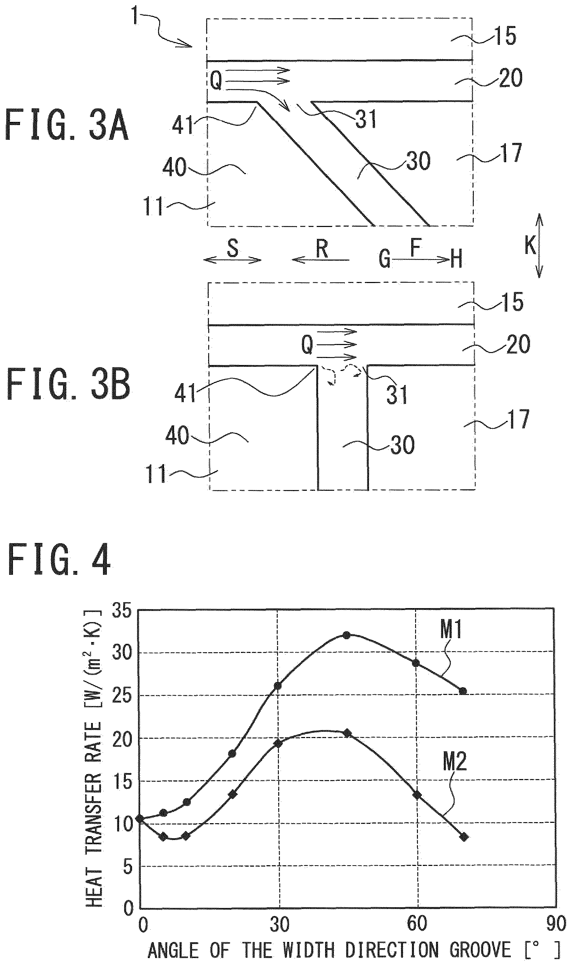

Fig. 3 is a view to explain the air flow Q during traveling of vehicle, and Fig. 3A shows the air flow Q around the first end 31 of the width direction groove 30 by arrows. Further, Fig. 3B shows the air flow Q around the first end 31 of the width direction groove 30 by arrows where the width direction groove 30 is made parallel to the tire width direction K.

As illustrated, the block 40 has a corner portion 41 formed at a position where the width direction groove 30 on the downstream side H in the air flow direction F is opened to the first circumferential groove 20. The corner portion 41 of the block 40 is formed at a position where the wall surface of the block 40 in the first circumferential groove 20 and the wall surface of the block 40 in the width direction groove 30 intersect with each other. The wall surfaces of the block 40 are formed each other toward different directions from the corner portion 41 as a boundary.

Where the width direction groove 30 is parallel to the tire width direction K (see Fig. 3B), the air flow Q in the first circumferential groove 20 is easily separated from the wall surface of the block 40 at the corner portion 41 of the block 40, and thus the air mainly flows in the first circumferential groove 20 toward the downstream side H. As the result, the air is hard to flow into the inside of the width direction groove 30 from the first end 31.

In contrast, where the width direction groove 30 is inclined with respect to the tire width direction K (see Fig. 3A), the air in the first circumferential groove 20 easily flows along the wall surface of the block 40 at the corner portion 41 of the block 40 by the Coanda effect. As a result, the air flow Q follows the wall surface of block 40 and thus the air flows into the inside of the width direction groove 30 from the first end 31. At the same time, pressure of the air decreases around the corner portion 41 of the block 40 and speed of the air flow Q in the first circumferential groove 20 is increased. Along with this, the heat transfer rate in the groove bottom of the first circumferential groove 20 is increased, and thus the heat radiation by the first circumferential groove 20 is increased. In addition, cooling of the tread portion 11 is promoted by the air flow Q in the first circumferential groove 20.

Fig. 4 is a graph indicating the heat transfer rate M1 of the first circumferential groove 20 and the heat transfer rate M2 of the second circumferential groove 21, and shows relations between the angle E of the width direction groove 30 with respect to the tire width direction K and the heat transfer rates M1, M2. The heat transfer rate M1 is an average heat transfer rate per unit area in the groove bottom of the first circumferential groove 20, and the heat transfer rate M2 is an average heat transfer rate per unit area in the groove bottom of the second circumferential groove 21.

As illustrated, the heat transfer rate M1 of the first circumferential groove 20 is raised higher than the heat transfer rate M2 of the second circumferential groove 21 by inclining the width direction groove 30 with respect to the tire width direction K. In addition, by an inclination of the width direction groove 30, the heat transfer rate M1 of the first circumferential groove 20 is raised higher than the heat transfer rate M1 where the angle E of the width direction groove 30 is 0 degree.

Where the angle E of the width direction groove 30 is 45 degrees, the heat transfer rate M1 of the first circumferential groove 20 is the highest. In contrast, the smaller the angle E of the width direction groove is, the smaller Coanda effect at the corner portion 41 of the block 40 is, and thus, the heat transfer rate M1 of the first circumferential groove 20 is relatively decreased.

In addition, it is necessary to maintain the area of the groove bottom of the width direction groove 30 to be constant even if the angle E of the width direction groove 30 is changed under the condition that the negative ratio related to the width direction groove 30 should be constant. Therefore, the larger the angle E of the width direction groove 30 is, the narrower the groove width of the width direction groove 30 is. With this, inflow resistance of the air to the width direction groove 30 is increased, and thus the heat transfer rate M1 of the first circumferential groove 20 is relatively decreased. Where the angle E of the width direction groove 30 is an angle of more than 10 degrees, the heat transfer rate M1 of the first circumferential groove 20 is increased more than 20% than the heat transfer rate M1 where the angle E of the width direction groove 30 is 0 degree.

As mentioned above, in the tire 1 of the first embodiment, the heat radiation in the first circumferential groove 20 and the second circumferential groove 21 can be adjusted by controlling the air flow Q during traveling of vehicle. In addition, in the first circumferential groove 20 located on the outermost side in the tire width direction K, the heat radiation can be promoted by increasing the speed of the air flow Q. Therefore, cooling effect of the tread portion 11 depending on the first circumferential groove 20 can be increased by improving the heat radiation of the first circumferential groove 20. With this, the tread portion 11 is cooled on the outside in the tire width direction K and thus the temperature of the tread portion 11 can be restrained from rising.

Since the first land part 15 and the second land part 16 are rib-shaped land parts, outflow of the air from the first circumferential groove 20 and the second circumferential groove 21 is restrained, and thus the heat radiation of the tread portion 11 is further promoted by the air flow Q in the first circumferential groove 20 and the second circumferential groove 21. Since the groove bottom surfaces of the first circumferential groove 20, the second circumferential groove 21 and the plurality of width direction grooves 30 are smooth surfaces, turbulence of the air flow Q at each groove bottom is prevented, and speed of the air flow Q is further increased. Where the first circumferential groove 20 and the second circumferential groove 21 extend linearly in the tire circumferential direction S, air in the first circumferential groove 20 and the second circumferential groove 21 flows smoothly, and the speed of the air flow Q is still further increased.

Where the angle E of the width direction groove 30 is smaller than 10 degrees, enough Coanda effect is not likely to be obtained at the corner portion 41 of the block 40. In addition, an influence is likely to be caused at the speed of the air flow Q in the first circumferential groove 20 where the angle E of the width direction groove 30 is larger than 60 degrees. In contrast, where the angle E of the width direction groove 30 is an angle within the range 10 to 60 degrees, enough Coanda effect is obtained at the corner portion 41 of the block 40 and the speed of the air flow Q in the first circumferential groove 20 can be increased surely.

In addition, the first circumferential groove 20 and the second circumferential groove 21 may be zigzag grooves extending in a zigzag in the tire circumferential direction S.

Subsequently, the tires of the second to ninth embodiments will be explained. The tires of the second to ninth embodiments are the examples each of which has changed a part of the tread pattern and have a function and advantageous effect similar to those of the tire 1 of the first embodiment. Therefore, in the following, explanation of the matter already explained will be omitted. In addition, with respect to the tire of the second to ninth embodiments, the same names and reference signs as those of the constitution of the tire 1 will be given to the constitution corresponding to the constitution of the tire 1 and the detailed explanation of each constitution will be omitted.

### (The second embodiment)

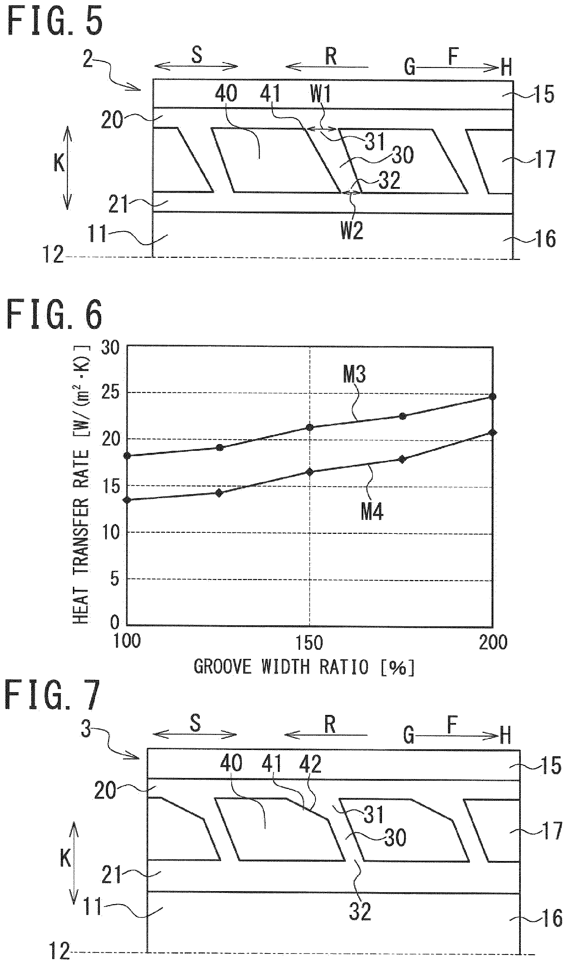

The Fig. 5 is a plan view illustrating a tread pattern of a tire 2 of the second embodiment and shows the tread pattern of the one side (in Fig. 5, the upper side) of the tire equatorial plane 12.

As illustrated, in the tire 2 of the second embodiment, only a groove width of the plurality of width direction grooves 30 differs from that of the tire 1 of the first embodiment. The groove width of each of the width direction grooves 30 is gradually widened toward the outside from the inside in the tire width direction K. Therefore, the groove width W1 of the first end 31 of the width direction groove 30 is wider than the groove width W2 of the second end 32 of the width direction groove 30 (W1 > W2). In addition, the groove width of the width direction groove 30 is the widest in the first end 31 and is gradually narrowed toward the second end 32 from the first end 31 and is the narrowest in the second end 32.

Fig. 6 is a graph indicating the heat transfer rate M3 of the first circumferential groove 20 and the heat transfer rate M4 of the second circumferential groove 21, and shows relations between the groove width ratio of the width direction groove 30 and the heat transfer rates M3, M4. The groove width ratio of the width direction groove 30 is the ratio between the groove width W1 of the first end 31 and the groove width W2 of the second end 32 ((W1/W2) ×100).

As illustrated, the heat transfer rate M3 of the first circumferential groove 20 is increased and also the heat transfer rate M4 of the second circumferential groove 21 is increased by widening the groove width of the width direction groove 30 toward the outside from the inside in the tire width direction K. In addition, the larger groove width ratio of the width direction groove 30 is, the higher heat transfer rates M3, M4 is.

In the tire 2 of the second embodiment, the air in the first circumferential groove 20 easily flow into the first end 31 of the width direction groove 30 and the pressure of the air surely decreases around the corner portion 41 of the block 40. Therefore, the speed of the air flow Q in the first circumferential groove 20 is increased, and the heat transfer rate in the groove bottom of the first circumferential groove 20 is increased. Therefore, the cooling effect of the tread portion 11 with the first circumferential groove 20 can be improved.

### (The third embodiment)

The Fig. 7 is a plan view illustrating a tread pattern of a tire 3 of the third embodiment and shows the tread pattern of the one side of the tire equatorial plane 12.

As illustrated, in the tire 3 of the third embodiment, only a shape of a part of the block 40 differs from that of the tire 1 of the first embodiment. Each block 40 of the plurality of blocks 40 has an inclined wall surface 42 formed from the first circumferential groove 20 toward the width direction groove 30. The inclined wall surface 42 is an inclined outside wall surface formed on the outside (the first circumferential groove 20 side) in the tire width direction K of the block 40, and is formed at the corner portion 41 of the block 40 at a position where the width direction groove 30 on the downstream side H in the air flow direction F of the block 40 is opened to the first circumferential groove 20. In addition, the inclined wall surface 42 of the block 40 is inclined inward in the tire width direction K with respect to the tire circumferential direction S toward the downstream side H in the air flow direction F.

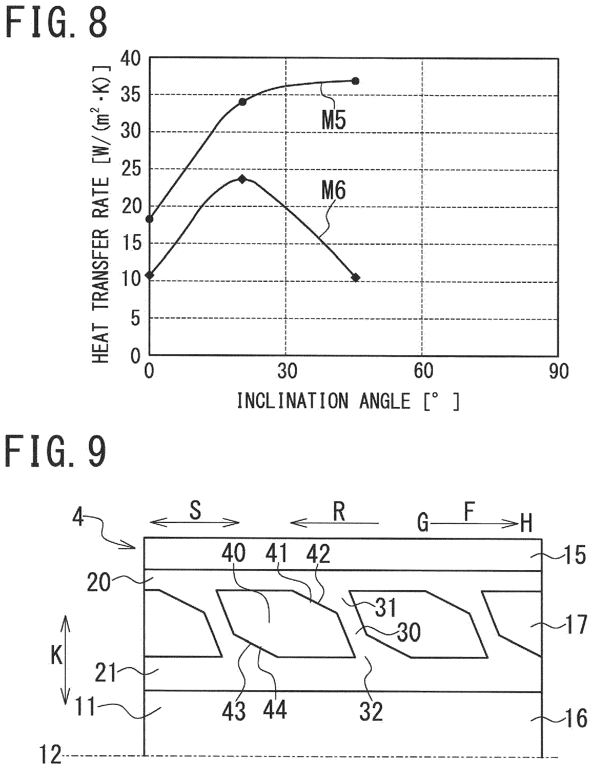

Fig. 8 is a graph indicating the heat transfer rates M5, M6 of the first circumferential groove 20, and shows relations between an inclination angle of the inclined wall surface 42 and the heat transfer rates M5, M6. The inclination angle of the inclined wall surface 42 is the angle of the inclined wall surface 42 with respect to the tire circumferential direction S. The heat transfer rate M5 is a heat transfer rate of the first circumferential groove 20 where the angle E of the width direction groove 30 is 20 degrees, and the heat transfer rate M6 is a heat transfer rate of the first circumferential groove 20 where the angle E of the width direction groove 30 is 0 degree.

As illustrated, the heat transfer rate M5 of the first circumferential groove 20 is increased by forming the inclined wall surface 42 on the block 40. In addition, the heat transfer rate M5 is higher than the heat transfer rate M6 where the inclination angle of the width direction groove 30 is 0 degree.

In the tire 3 of the third embodiment, the inclined wall surface 42 provides the higher Coanda effect at the corner portion 41 of the block 40 and the lower pressure of the air around the corner portion 41. Therefore, the speed of the air flow Q in the first circumferential groove 20 is increased, and the heat transfer rate in the groove bottom of the first circumferential groove 20 is increased. Therefore, the cooling effect of the tread portion 11 with the first circumferential groove 20 can be further improved.

### (The fourth embodiment)

The Fig. 9 is a plan view illustrating a tread pattern of a tire 4 of the fourth embodiment and shows the tread pattern of the one side of the tire equatorial plane 12.

As illustrated, in the tire 4 of the fourth embodiment, only a shape of a part of the block 40 differs from that of the tire 3 of the third embodiment. Each block 40 of the plurality of blocks 40 has an inclined wall surface 43 formed from the second circumferential groove 21 toward the width direction groove 30 besides the inclined wall surface 42 which is the inclined outside wall surface (the first inclined wall surface). The inclined wall surface 43 is an inclined inside wall surface (the second inclined wall surface) formed on the inside (the second circumferential groove 21 side) of the block 40 in the tire width direction K, and is formed at the corner portion 44 on the upstream side G of the block 40 in the air flow direction F at a position where the width direction groove 30 is opened to the second circumferential groove 21. In addition, the inclined wall surface 43 of the block 40 is inclined inward in the tire width direction K with respect to the tire circumferential direction S toward the downstream side H in the air flow direction F.

In the tire 4 of the fourth embodiment, the air easily flows from the width direction groove 30 into the second circumferential groove 21 by the inclined wall surface 43 and flows smoothly in the second circumferential groove 21 toward the downstream side H in the air flow direction F. Therefore, the speed of the air flow Q in the second circumferential groove 21 is increased, and the heat transfer rate in the groove bottom of the second circumferential groove 21 is increased. Therefore, the cooling effect of the tread portion 11 with the second circumferential groove 21 can be improved.

### (The fifth embodiment)

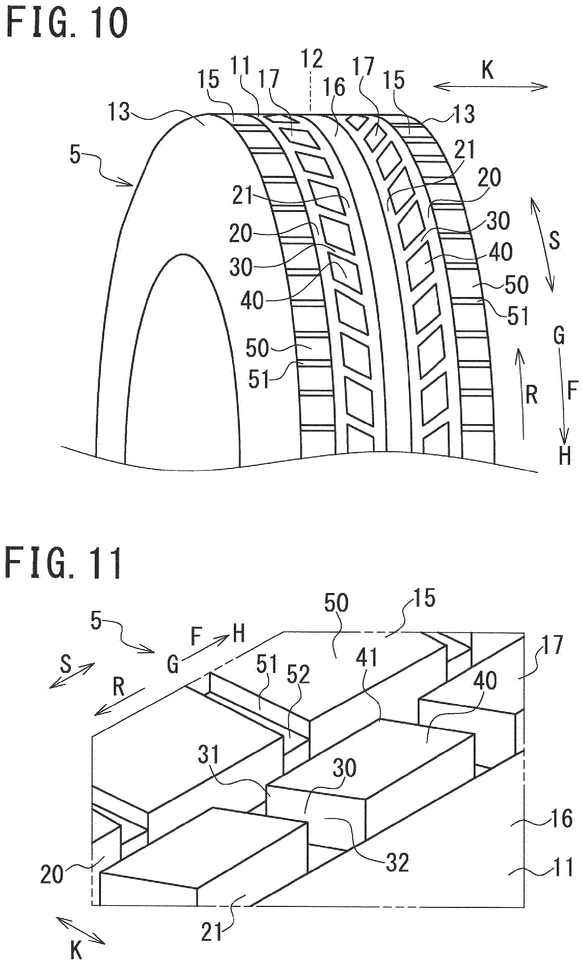

Fig. 10 is a perspective view of a tire 5 of the fifth embodiment, and Fig. 11 is a perspective view illustrating a part of a tread pattern formed on the tire 5 of the fifth embodiment. The tire 5 of the fifth embodiment is not according to the present invention, but is useful for understanding the present invention.

As illustrated, in the tire 5 of the firth embodiment, only the first land part 15 differs from that of the tire 1 of the first embodiment. The first land part 15 is a block row (intermittent land part) comprising a plurality of blocks 50 arranged in parallel in the tire circumferential direction S and a plurality of lug grooves 51 arranged separately in the tire circumferential direction. The lug groove 51 extends in tire width direction K and is formed from the first circumferential groove 20 to the shoulder portion 13. The plurality of blocks 50 are adjacently, sequentially arranged in the tire circumferential direction S, and each of the plurality of lug grooves 51 is located between the blocks 50 which are adjacent each other in the tire circumferential direction S. In addition, the lug groove 51 is formed on the outside in the tire width direction K of the first circumferential groove 20 and is opened to the first circumferential groove 20.

The tire 5 includes a raised portion 52 formed within each of the lug grooves 51. The raised portion 52 is raised from a groove bottom of the lug groove 51 and connects groove walls (wall surfaces of the block 50) on both sides of the lug groove 51. Here, the raised portion 52 is a tie-bar, and at least a part of the lug groove 51 is shallower than the second circumferential direction groove 21 with the raised portion 52. The air flowing in the first circumferential groove 20 can be restrained by the raised portions 52 in the lug grooves 51 from outflowing through the lug grooves 51. As a result, the air flow Q can be concentrated in the first circumferential groove 20. In addition, the lug grooves 51 can be restrained by the raised portions 52 from influencing the air flow Q in the first circumferential groove 20.

### (The sixth embodiment)

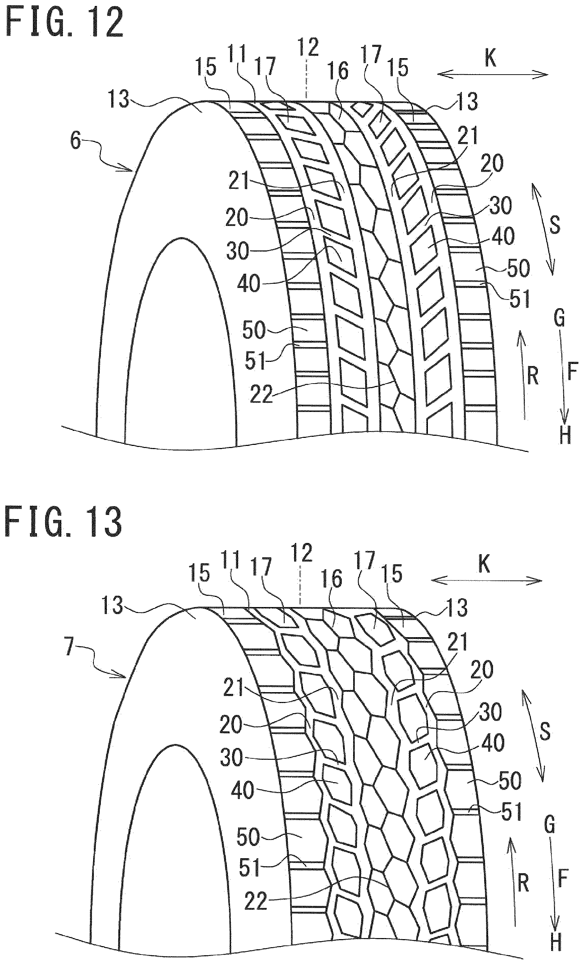

Fig. 12 is a perspective view of a tire 6 of a sixth embodiment, which is not according to the present invention, but is useful for understanding the present invention.

As illustrated, in the tire 6 of the sixth embodiment, only the second land part 16 differs from that of the tire 5 of the fifth embodiment. Tire 6 comprises sipes 22 formed on the second land part 16.

### (The seventh embodiment)

Fig. 13 is a perspective view of a tire 7 of a seventh embodiment, which is not according to the present invention, but is useful for understanding the present invention.

As illustrated, in the tire 7 of the seventh embodiment, only the first circumferential groove 20 and the second circumferential groove 21 differ from those of the tire 6 of the sixth embodiment. The first circumferential groove 20 and the second circumferential groove 21 are zigzag grooves extending in a zigzag in the tire circumferential direction S.

### (The eighth embodiment)

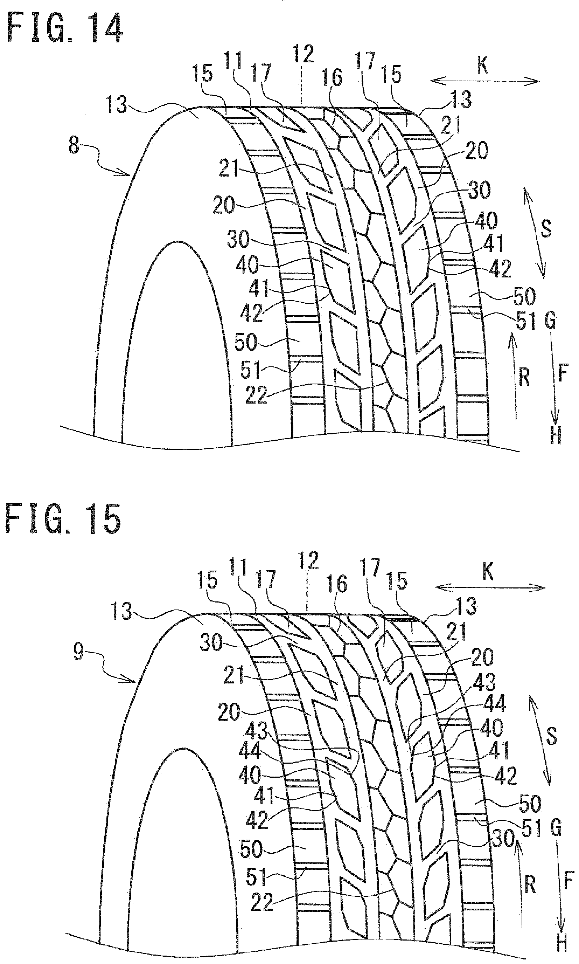

Fig. 14 is a perspective view of a tire 8 of an eighth embodiment, which is not according to the present invention, but is useful for understanding the present invention.

As illustrated, in the tire 8 of the eighth embodiment, only the block 40 differs from that of the tire 6 of the sixth embodiment. As with the tire 3 of the third embodiment, the block 40 of the tire 8 has an inclined wall surface 42 formed on the corner portion 41.

### (The ninth embodiment)

Fig. 15 is a perspective view of a tire 9 of a ninth embodiment, which is not according to the present invention, but is useful for understanding the present invention.

As illustrated, in the tire 9 of the ninth embodiment, only the block 40 differs from that of the tire 8 of the eighth embodiment. As with the tire 4 of the fourth embodiment, the block 40 of the tire 9 has an inclined wall surface 43 formed at the corner portion 44 on the inside in the tire width direction K besides the inclined wall surface 42 formed at the corner portion 41 on the outside in the tire width direction K.

### Reference Signs List

- 1 ∼ 9: tire
- 11: tread portion
- 12: tire equatorial plane
- 13: shoulder portion
- 15: first land part
- 16: second land part
- 27: third land part
- 20: first circumferential groove
- 21: second circumferential groove
- 22: sipe
- 30: width direction groove
- 31: first end
- 32: second end
- 40: block
- 41: corner portion
- 42: inclined wall surface
- 43: inclined wall surface
- 44: corner portion
- 50: block
- 51: lug groove
- 52: raised portion
- F: air flow direction
- G: upstream side
- H: downstream side
- K: tire width direction
- Q: air flow
- R: tire rotating direction
- S: tire circumferential direction

## Claims

1. A tire (1) for a vehicle, comprising four or more circumferential grooves which include a first circumferential groove (20) located on the outermost side in the tire width direction (K) and a second circumferential groove (21) adjacent to the inside in the tire width direction (K) of the first circumferential groove (20); and
wherein the tire (1) rotates in a tire rotating direction (R) during forward movement of the vehicle and an air flow (Q) in a direction (F) opposite to the tire rotating direction (R) is generated in the first circumferential groove (20) and the second circumferential groove (21) during traveling of the vehicle; and
wherein the tire rotating direction (R) is designated corresponding to the tread pattern of the tire (1), and the tire (1) is to be installed on the vehicle so that the tire rotating direction (R) is compatible; the tire (1) comprising:
a first land part (15) arranged outside the first circumferential groove (20) in the tire width direction (K),
a second land part (16) arranged inside the second circumferential groove (21) in the tire width direction (K),
a plurality of width direction grooves (30) each of which extends with an inclination between the first circumferential groove (20) and the second circumferential groove (21) with respect to the tire width direction (K) and has a first end (31) opened to the first circumferential groove (20) and a second end (32) opened to the second circumferential groove (21), and
a plurality of blocks (40) partitioned between the first circumferential groove (20) and the second circumferential groove (21) by the first circumferential groove (20), the second circumferential groove (21), and the plurality of width direction grooves (30),
wherein the plurality of blocks (40) are arranged in parallel in the tire circumferential direction (S);
the first end (31) of each of the width direction grooves (30) is located in a further upstream side (G) of the second end (32) of each of the width direction grooves (30) in the air flow direction (F);
a pair of the first circumferential groove (20) and the second circumferential groove (21) is arranged between a tire equatorial plane (12) and a shoulder portion (13) on both sides of the tire equatorial plane (12);
the tire equatorial plane (12) is located on a center part of a tread portion (11) of the tire (1) in the tire width direction (K), and the shoulder portions (13) of the tire (1) are located outside the tread portion (11) in the tire width direction (K);
the groove bottom surfaces of the first circumferential grooves (20), the second circumferential grooves (21) and the plurality of width direction grooves (30) are smooth surfaces without convexity and concavity, **characterized in that**:
each land part (15, 16) is a rib-shaped land part continuously extending in the tire circumferential direction (S) without being divided in the tire circumferential direction (S), and
depths of the first circumferential grooves (20), the second circumferential grooves (21) and the plurality of width direction grooves (30) are the same.

2. The tire according to claim 1, wherein
the first circumferential grooves (20) and the second circumferential grooves (21) extend linearly in the tire circumferential direction (S).

3. The tire according to claim 1 or 2, wherein
each of the width direction grooves (30) is inclined with respect to the tire width direction (K) at an angle within a range 10 to 60 degrees.

4. The tire according to any of claims 1 to 3, wherein
the groove width of each of the width direction grooves (30) is gradually widened toward the outside from the inside in the tire width direction (K).

5. The tire according to any of claims 1 to 4, wherein
each of the blocks (40) has an inclined wall surface (42) which is formed at the corner portion (41) of the block (40) at a position where the width direction groove (30) on the downstream side (H) in the air flow direction (F) of the block (40) is opened to the first circumferential groove (20) and is inclined inward in the tire width direction (K) with respect to the tire circumferential direction (S) toward the downstream side (H) in the air flow direction (F).

## Patentansprüche

1. Reifen (1) für ein Fahrzeug, der vier oder mehr umlaufende Rillen umfasst, die eine erste umlaufende Rille (20), die auf der in der Reifenbreitenrichtung (K) äußersten Seite angeordnet ist, und eine zweite umlaufende Rille (21), die angrenzend an die in der Reifenbreitenrichtung (K) innere Seite der ersten umlaufenden Rille (20) angeordnet ist, einschließen, und
wobei sich der Reifen (1) während einer Vorwärtsbewegung des Fahrzeugs in einer Reifendrehungsrichtung (R) dreht und ein Luftstrom (Q) in einer Richtung (F), entgegengesetzt zu der Reifendrehungsrichtung (R), während des Fahrens des Fahrzeugs in der ersten umlaufenden Rille (20) und der zweiten umlaufenden Rille (21) erzeugt wird und
wobei die Reifendrehungsrichtung (R) entsprechend dem Laufflächenprofil des Reifens (1) ausgewiesen ist und der Reifen (1) so an dem Fahrzeug angebaut werden soll, dass die Reifendrehungsrichtung (R) vereinbar ist, wobei der Reifen (1) Folgendes umfass:
einen ersten Stegteil (15), der in der Reifenbreitenrichtung (K) von der ersten umlaufenden Rille (20) nach außen angeordnet ist,
einen zweiten Stegteil (16), der in der Reifenbreitenrichtung (K) von der zweiten umlaufenden Rille (21) nach innen angeordnet ist,
eine Mehrzahl von Breitenrichtungsrillen (30), deren jede sich mit einer Neigung zwischen der ersten umlaufenden Rille (20) und der zweiten umlaufenden Rille (21) in Bezug auf die Reifenbreitenrichtung (K) erstreckt und ein erstes Ende (31), das zu der ersten umlaufenden Rille (20) geöffnet ist, und ein zweites Ende (32), das zu der zweiten umlaufenden Rille (21) geöffnet ist, aufweist, und
eine Mehrzahl von Blöcke (40), die zwischen der ersten umlaufenden Rille (20) und der zweiten umlaufenden Rille (21) durch die erste umlaufende Rille (20), die zweite umlaufende Rille (21) und die Mehrzahl von Breitenrichtungsrillen (30) unterteilt sind, und
wobei die mehreren Blöcke (40) parallel in der Reifenumfangsrichtung (S) angeordnet sind,
das erste Ende (31) jeder der Breitenrichtungsrillen (30) in einer weiteren stromaufwärts gelegenen Seite (G) des zweiten Endes (32) jeder der Breitenrichtungsrillen (30) in der Luftströmungsrichtung (F) angeordnet ist,
ein Paar aus der ersten umlaufenden Rille (20) und der zweiten umlaufenden Rille (21) zwischen einer Reifenäquatorialebene (12) und einem Schulterabschnitt (13) auf beiden Seiten der Reifenäquatorialebene (12) angeordnet ist,
die Reifenäquatorialebene (12) auf einem in der Reifenbreitenrichtung (K) mittigen Teil eines Laufflächenabschnitts (11) des Reifens (1) angeordnet ist und die Schulterabschnitte (13) des Reifens (1) in der Reifenbreitenrichtung (K) von dem Laufflächenabschnitt (11) nach außen angeordnet sind,
die Rillensohlenflächen der ersten umlaufenden Rille (20), der zweiten umlaufenden Rille (21) und der Mehrzahl von Breitenrichtungsrillen (30) glatte Flächen ohne Konvexität und Konkavität sind, **dadurch gekennzeichnet, dass**:
jeder Stegteil (15, 16) ein rippenförmiger Stegteil ist, der sich durchgehend in der Reifenumfangsrichtung (S) erstreckt, ohne in der Reifenumfangsrichtung (S) geteilt zu sein, und
Tiefen der ersten umlaufenden Rille (20), der zweiten umlaufenden Rille (21) und der Mehrzahl von Breitenrichtungsrillen (30) gleich sind.

2. Reifen nach Anspruch 1, wobei
sich die erste umlaufende Rille (20) und die zweite umlaufende Rille (21) linear in der Reifenumfangsrichtung (S) erstrecken.

3. Reifen nach Anspruch 1 oder 2, wobei
jede der Breitenrichtungsrillen (30) in Bezug auf die Reifenbreitenrichtung (K) in einem Winkel innerhalb eines Bereichs von 10 bis 60 Grad geneigt ist.

4. Reifen nach einem der Ansprüche 1 bis 3, wobei
die Rillenbreite jeder der Breitenrichtungsrillen (30) in der Reifenbreitenrichtung (K) von der Innenseite zu der Außenseite hin allmählich verbreitert ist.

5. Reifen nach einem der Ansprüche 1 bis 4, wobei
jeder der Blöcke (40) eine geneigte Wandfläche (42) aufweist, die an dem Eckabschnitt (41) des Blocks (40) an einer Position geformt ist, wo die Breitenrichtungsrille (30) auf der in der Luftströmungsrichtung (F) stromabwärts gelegenen Seite (H) des Blocks (40) zu der ersten umlaufenden Rille (20) geöffnet ist, und in der Reifenbreitenrichtung (K) nach innen in Bezug auf die Reifenumfangsrichtung (S) zu der in der Luftströmungsrichtung (F) stromabwärts gelegenen Seite (H) hin geneigt ist.

## Revendications

1. Bandage pneumatique (1) pour un véhicule, comprenant quatre ou plus de rainures circonférentielles incluant une première rainure circonférentielle (20) formée sur le côté externe extrême, dans la direction de la largeur du bandage pneumatique (K), et une deuxième rainure circonférentielle (21) adjacente à l'intérieur, dans la direction de la largeur du bandage pneumatique (K), de la première rainure circonférentielle (20) ; et
dans lequel le bandage pneumatique (1) tourne dans une direction de rotation du bandage pneumatique (R) au cours du déplacement vers l'avant du véhicule, un écoulement d'air (Q), dans une direction (F) opposée à la direction de rotation du bandage pneumatique (R), étant généré dans la première rainure circonférentielle (20) et la deuxième rainure circonférentielle (21) au cours du déplacement du véhicule ; et
dans lequel la direction de rotation du bandage pneumatique (R) est spécifiée en fonction de la surface de la bande de roulement du bandage pneumatique (1), et le bandage pneumatique (1) doit être installé sur le véhicule de sorte que la direction de rotation du bandage pneumatique (R) soit compatible ; le bandage pneumatique (1) comprenant :
une première partie d'appui (15) agencée à l'extérieur de la première rainure circonférentielle (20), dans la direction de la largeur du bandage pneumatique (K) ;
une deuxième partie d'appui (16) agencée à l'intérieur de la deuxième rainure circonférentielle (21), dans la direction de la largeur du bandage pneumatique (K) ;
une pluralité de rainures dans la direction de la largeur (30), s'étendant chacune à une inclinaison entre la première rainure circonférentielle (20) et la deuxième rainure circonférentielle (21) par rapport à la direction de la largeur du bandage pneumatique (K), et comportant une première extrémité (31) ouverte vers la première rainure circonférentielle (20) et une deuxième extrémité (32) ouverte vers la deuxième rainure circonférentielle (21) ; et
une pluralité de pavés (40) entre la première rainure circonférentielle (20) et la deuxième rainure circonférentielle (21), séparés par la première rainure circonférentielle (20), la deuxième rainure circonférentielle (21) et la pluralité de rainures dans la direction de la largeur (30) ;
dans lequel la pluralité de pavés (40) sont agencés en parallèle dans la direction circonférentielle du bandage pneumatique (S) ;
la première extrémité (31) de chacune des rainures dans la direction de la largeur (30) est agencée dans un côté plus en amont (G) de la deuxième extrémité (32) de chacune des rainures dans la direction de la largeur (30), dans la direction de l'écoulement d'air (F) ;
une paire de la première rainure circonférentielle (20) et de la deuxième rainure circonférentielle (21) est agencée entre un plan équatorial du bandage pneumatique (12) et une partie d'épaulement (13), sur les deux côtés du plan équatorial du bandage pneumatique (12) ;
le plan équatorial du bandage pneumatique (12) se situe sur une partie centrale d'une partie de la bande de roulement (11) du bandage pneumatique (1), dans la direction de la largeur du bandage pneumatique (K), et les parties d'épaulement (13) du bandage pneumatique (1) sont agencées à l'extérieur de la partie de bande de roulement (11), dans la direction de la largeur du bandage pneumatique (K) ;
les surfaces de fond de rainure des premières rainures circonférentielles (20), des deuxièmes rainures circonférentielles (21) et la pluralité de rainures dans la direction de la largeur (30) sont des surfaces lisses, sans convexité et concavité, **caractérisé en ce que** :
chaque partie d'appui (15, 16) est une partie d'appui en forme de nervure s'étendant en continu dans la direction circonférentielle du bandage pneumatique (S), sans être divisée dans la direction circonférentielle du bandage pneumatique (S) ; et
les profondeurs de la pluralité de rainures circonférentielles (20), des deuxièmes rainures circonférentielles (21) et des plusieurs rainures dans la direction de la largeur (30) sont identiques.

2. Bandage pneumatique selon la revendication 1, dans lequel :
les premières rainures circonférentielles (20) et les deuxièmes rainures circonférentielles (21) s'étendent de manière linéaire dans la direction circonférentielle du bandage pneumatique (S).

3. Bandage pneumatique selon les revendications 1 ou 2, dans lequel :
chacune des rainures dans la direction de la largeur (30) est inclinée par rapport à la direction de la largeur du bandage pneumatique (K) d'un angle compris dans l'intervalle allant de 10 à 60 degrés.

4. Bandage pneumatique selon l'une quelconque de revendications 1 à 3, dans lequel :
la largeur de rainure de chacune des rainures dans la direction de la largeur (30) est progressivement accrue vers l'extérieur à partir de l'intérieur, dans la direction de la largeur du bandage pneumatique (K).

5. Bandage pneumatique selon l'une quelconque des revendications 1 à 4, dans lequel :
chacun des pavés (40) comporte une surface de paroi inclinée (42) formée au niveau de la partie de coin (41) du pavé (40), au niveau d'une position où la rainure dans la direction de la largeur (30) sur le côté aval (H), dans la direction de l'écoulement d'air (F), du pavé (40) est ouverte vers la première rainure circonférentielle (20) et est inclinée vers l'intérieur, dans la direction de la largeur du bandage pneumatique (K), par apport à la direction circonférentielle du bandage pneumatique (S), vers le côté aval (H), dans la direction de l'écoulement d'air (F).
